# EUROPEAN PATENT APPLICATION

(11) **EP 2 538 246 A2**
(43) Date of publication of application: **26.12.2012**
(21) Application number: 12173441.2
(22) Date of filing: 25.06.2012
(51) Int. Cl.: G02B 1/11

(54) **Coating film and coating film formation method**

(30) Priority: 24.06.2011 JP 2011141152
(71) Applicant: Seiko Epson Corporation, Tokyo 163 (JP); Panasonic Corporation, Osaka 571-8501 (JP)
(72) Inventor: Hoshino, Yuta, Nagano, 392-8502 (JP); Naito, Shuji, Nagano, 392-8502 (JP); Tamaru, Hiroshi, Osaka, 540-6207 (JP)
(74) Representative: HOFFMANN EITLE

(57) **Abstract**

A coating film comprises a binder component containing an organosilicon compound; and aggregated particles of silica based fine particles, the aggregated particles are dispersed in the binder component. The aggregated particles are protruded from a surface of the coating film to thereby form convex portions. When a shape of each of the convex portions is assumed to be a shape of a semiellipse spherical body including a long radius "a", a short radius "b" and a protrusion height "c", the convex portions include enlarged convex portions each of which satisfies the following relation: 2/3πabc≥1.0×10⁻¹². A number of the enlarged convex portions is 200 or less per 1 mm² of the surface of the coating film.

## Description

### BACKGROUND

### 1. Technical Field

The present invention relates to a coating film and a coating film formation method.

### 2. Related Art

Known is, for example, a technology of forming an organic based antireflection coating on a surface of a plastic lens such as a spectacle lens. Further, as a coating liquid for forming an organic based antireflection coating, for example, the coating liquid disclosed in JP-A 2007-102096 is known.
Such a coating liquid disclosed in JP-A 2007-102096 is produced as follows. First, an organosilicon compound having fluorine atoms is diluted with an organic solvent, and then an organosilicon compound having an epoxy group is added to the solvent to obtain a mixture. Thereafter, water, thin hydrochloric acid or acetic acid is added to the mixture to perform a hydrolysis condensation polymerization as necessary. Next, a dispersion liquid in which silica based fine particles having an average particle size in a range of 1 to 150 nm are dispersed in an organic solvent in a colloid manner is added to the mixture. Thereafter, as necessary, a curing catalyst, a photopolymerization initiator, an acid generating agent, a surfactant, an ultraviolet absorbing agent, an antioxidizing agent and the like are further added thereto. The resultant is mixed sufficiently. Thus, the coating liquid is produced.

However, the inventors observed and studied an antireflection coating formed by using the coating liquid disclosed in JP-A 2007-102096, so that they found that the silica based fine particles are aggregated in the antireflection coating. Such an aggregation of the silica based fine particles makes it difficult to form a dense coating film, so that there is a problem in that water resistance, chemical resistance, heat resistance, and blemish resistance are lowered. Further, convex portions are formed on a surface of the coating film due to silica based secondary particles which are formed by the aggregation. If the surface of the antireflection coating is wiped by a cloth and the like in order to remove contaminations, there is a case where the silica based secondary particles in the convex portions are removed from the antireflection coating, thereby forming concave portions thereto. Such concave portions cause cracks and intrusion of moisture (water), so that the concave portions cause physical characteristics of the antireflection coating to be lowered.

Accordingly, it is an object of the present invention to provide a coating film which is dense and capable of maintaining physical characteristics thereof.

### SUMMARY

A coating film of one embodiment of the invention is provided. Such a coating film comprises a binder component containing an organosilicon compound; and aggregated particles of silica based fine particles, the aggregated particles are dispersed in the binder component. The aggregated particles are protruded from a surface of the coating film to thereby form convex portions. When a shape of each of the convex portions is assumed to be a shape of a semiellipse spherical body including a long radius "a", a short radius "b" and a protrusion height "c", the convex portions include enlarged convex portions each of which satisfies the following relation: 2/3πabc≥1.0×10⁻²². A number of the enlarged convex portions is 200 or less per 1 mm² of the surface of the coating film.
Since this makes it possible to decrease a number of the enlarged convex portions, it is possible to provide a coating film which is dense and capable of maintaining physical characteristics thereof.

In accordance with the coating film of the embodiment, it is preferred that the binder component contains a siloxane oligomer having a cross-linked structure and a linear type siloxane oligomer, and the silica based fine particles include chain siloxane oligomers grafted on a surface of each of the silica based fine particles.
This makes it possible to prevent or suppress the silica based fine particles from being aggregated, thereby to decrease a number of the enlarged convex portions.

In accordance with the coating film of the embodiment, it is also preferred that the coating film is formed by adding the silica based fine particles into a liquid containing at least a chain siloxane oligomer, hydrolyzing the chain siloxane oligomer contained in the liquid and performing a condensation polymerization of the chain siloxane oligomer under an environment of a pH in a range of 5.0 to 7.0 to obtain a film formation coating liquid, and then applying the film formation coating liquid onto the base material and drying the applied film formation coating liquid.
This makes it possible to prevent or suppress the silica based fine particles from being aggregated, thereby to decrease a number of the enlarged convex portions.

In accordance with the coating film of the embodiment, it is also preferred that a refractive index of the coating film is 1.4 or less.
This makes it possible to exhibit excellent performance as the antireflection coating.
In accordance with the coating film of the embodiment, it is also preferred that the silica based fine particles are hollow silica particles.
This makes it possible to lower the refractive index of the coating film with ease.
In accordance with the coating film of the embodiment, it is also preferred that an average particle size of the silica based fine particles is in a range of 5 to 200 nm.
This makes it possible to lower the refractive index of the silica based fine particles and suppress the convex portions from generating.
In accordance with the coating film of the embodiment, it is also preferred that a thickness of the coating film is in a range of 50 to 200 nm.
This makes it possible to prevent or suppress the convex portions from generating while assisting the coating film thinner.

In accordance with the coating film of the embodiment, it is also preferred that a thermal expansion coefficient of the coating film is equal to a thermal expansion coefficient of a base material.
This makes it possible to efficiently prevent or suppress damages of the coating film due to thermal expansion.
In accordance with the coating film of the embodiment, it is also preferred that Young's modulus of the coating film is larger than Young's modulus of a base material.
Even if the base material is deformed by external force, the coating film is also deformed by following the deformation of the base material, so that it is possible to prevent or suppress the damages of the coating film.
A coating film formation method is provided. Such a coating film formation method comprises: adding silica based fine particles into a liquid containing at least a chain siloxane oligomer; hydrolyzing the chain siloxane oligomer; performing a condensation polymerization of the chain siloxane oligomer under an environment of a pH in a range of 5.0 to 7.0 to obtain a coating liquid; applying the coating liquid onto a base material; and drying the applied coating liquid.

### BRIEF DESCRIPTION OF THE DRAWINGS

FIG. 1 shows a schematically section view of a coating film according to a first embodiment of the present invention.
FIG. 2 shows an enlarged section view of the coating film shown in FIG. 1.
FIG. 3 shows a graph of a relation between a pH value and a reaction speed of a silica sol.

### DESCRIPTION OF EXEMPLARY EMBODIMENTS

Hereinbelow, a coating film according to the present invention will be described in detail with reference to preferred embodiments shown in the accompanying drawings.

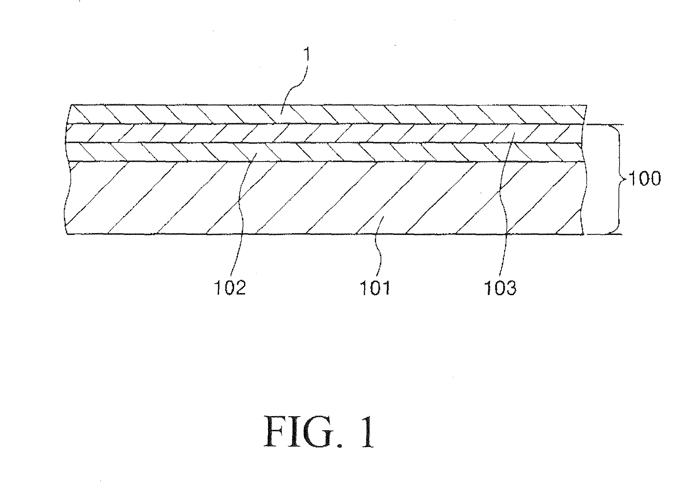

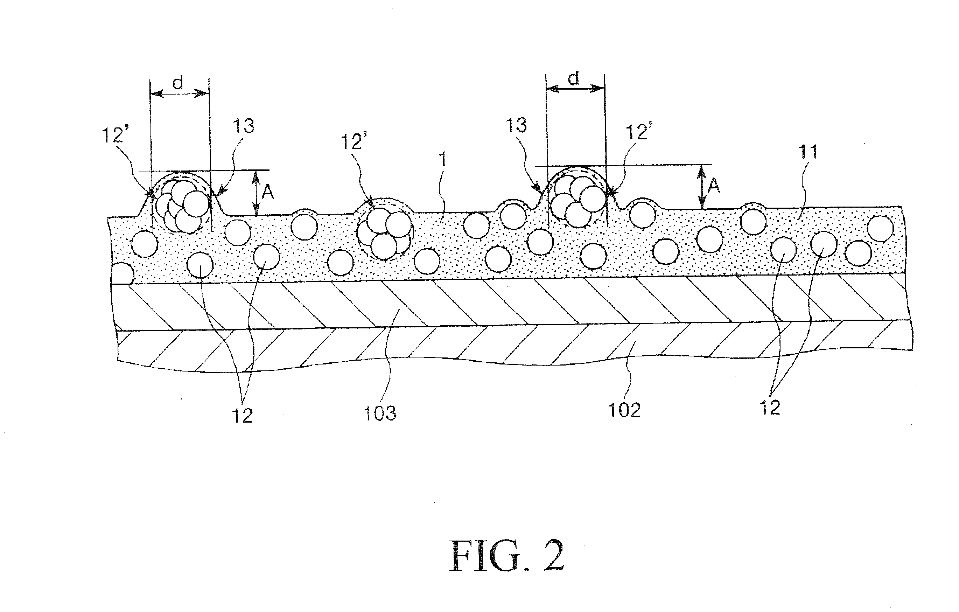

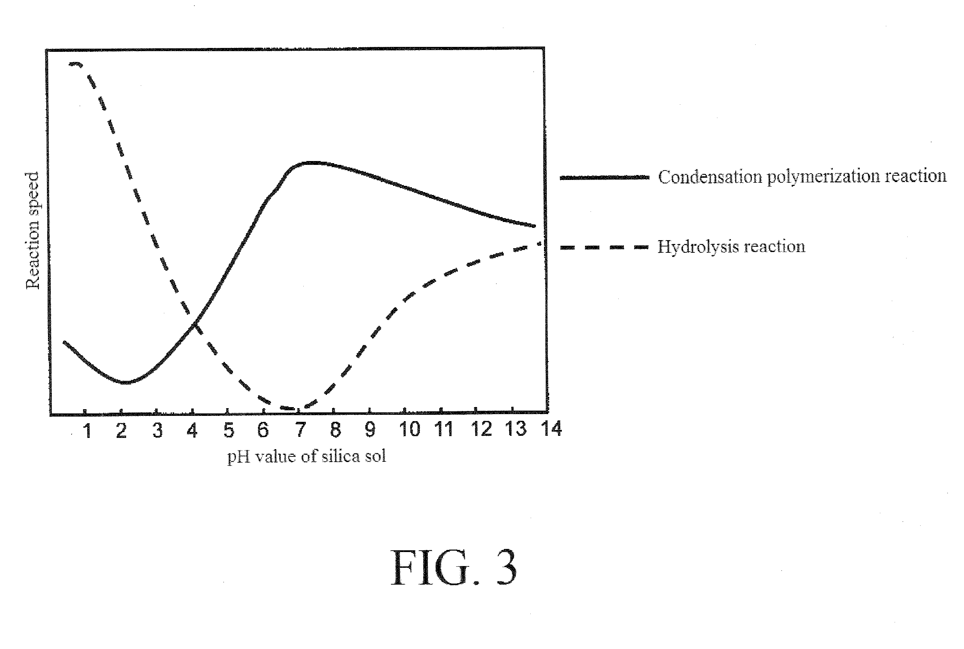

FIG. 1 shows a schematically section view of a coating film according to a first embodiment of the present invention. FIG. 2 shows an enlarged section view of the coating film shown in FIG. 1. FIG. 3 shows a graph of a relation between a pH value and a reaction speed of a silica sol. In the following description, the upper side in FIGs. 1 and 2 will be referred to as "upper" and the lower side thereof will be referred to as "lower" for convenience of explanation.

### 1. Coating Film

As shown in FIG. 1, for example, a coating film 1 is formed on a lens substrate (plastic lens) 100 such as a spectacle lens, and thus is used as an antireflection coating having antireflection performance. The lens substrate 100 of the embodiment is constituted from a lens base 101, a primer layer 102 formed on a surface of the lens base 101 and a hard coating layer 103 formed on a surface of the primer layer 102. The coating film 1 is formed on a surface of the hard coating layer 103.
In this regard, it is to be noted that the lens substrate 100 is not limited thereto, but the primer layer 102 and the hard coating layer 103 may be omitted.

### Lens Substrate 100

### Lens Base 101

Examples of the lens base 101 include, but not particularly limited thereto, various kinds of plastic lens. More specifically, examples of the lens base 101 include a thiourethan based plastic lens base ("Seiko Super Sovereign Cloth" produced by Seiko Epson Corp., refractive index 1.67).

### Primer Layer 102

The primer layer 102 intervenes between the lens base 101 and the hard coating layer 103 and is a layer for improving the adhesion between the lens base 101 and the hard coating layer 103. The primer layer 102, for example, can be produced by coating a composition on the lens base 101. Such a composition contains an (A) component having adhesion to both the lens base 101 and the hard coating layer 103 and a (B) component for improving water resistance and weather resistance by acting on the improvement of a crosslink density of the primer layer 102 as a filler with generation of a refractive index of a primer.

Examples of the (A) component include various kinds of resin material such as a polyester resin, a polyurethane resin, an epoxy resin, a melamine resin, a polyolefin resin, an urethane acrylate resin, an epoxy acrylate resin and the like. On the other hand, examples of the (B) component include metal oxide fine particles including titanium oxide. An average particle size of the metal oxide fine particles is in a range of about 1 to 200 nm.

### Hard Coating Layer 103

The hard coating layer 103 is a layer for protecting the surface of the lens base 101. Such a hard coating layer 103 is not particularly limited, but can be produced by coating a composition containing the following (C) component and (D) component on the primer layer 102.

Examples of the (C) component include metal oxide fine particles including titanium oxide. An average particle size of the metal oxide fine particles is in a range of about 1 to 200 nm. It is preferred that the titanium oxide included in the metal oxide fine particles has a rutile type crystal structure. On the other hand, examples of the (D) component include an organosilicon compound represented by a general formula: R¹SiX¹₃, where in the general formula R¹ represents an organic group having two or more carbon numbers and polymerizable reaction groups, and X¹ represents a hydrolysis group.
As described above, the description was made on one example of the lens substrate 100. In this regard, before the coating film 1 is formed on the lens substrate 100, it is preferred that the lens substrate 100 is subjected to a plasma treatment (atmospheric plasma).

### Coating Film 1

As shown in FIG. 2, the coating film 1 has a binder (binder component) 11 and silica based fine particles 12 held (included) in the binder 11.

### Binder 11

The binder 11 contains at least a siloxane oligomer having a cross-linked structure and a linear type siloxane oligomer. In this regard, it is preferred that the siloxane oligomer having the cross-linked structure is contained in a larger amount than the linear type siloxane oligomer in the binder 11. However, this is not particularly limited thereto. Concretely, a weight ratio of the siloxane oligomer having the cross-linked structure and the linear type siloxane oligomer is preferably in a range of about 7 : 3 to 9.5:0.5 (siloxane oligomer having the cross-linked structure : linear type siloxane oligomer). This makes it possible to obtain a dense coating film 1.

### Silica Based Fine Particles 12

The silica based fine particles 12 are hollow silica particles having hollow inside them. The hollow silica particles are constituted of SiO₂. Since such hollow silica particles have a low refractive index, it is possible to sufficiently lower the refractive index of the coating film 1, so that the hollow silica particles can be reliably used as the antireflection coating. Since such hollow silica particles are fine particles in a colloid manner and have excellent dispersibility, it is possible to efficiently prevent or suppress secondary particles formed by aggregating the silica based fine particle 12 from being generated.

An average particle size of the silica based fine particles 12 are not particularly limited to a specific value, but preferably in a range of about 5 to 200 nm, and more preferably in a range of 10 to 100 nm. If the average particle size of the silica based fine particles 12 is smaller than the above-noted minimum value, it is difficult to obtain fine particles having a low refractive index, so that there is a case where the antireflection performance of the coating film 1 becomes insufficient. In contrast, if the average particle size of the silica based fine particles 12 exceeds the above-noted maximum value, there is a fear that a haze value of the coating film 1 becomes high due to the formation of a large number of unnecessary concave-convex portions (convex portions 13 described later) on the surface of the coating film 1 (namely, the surface of the coating film 1 becomes uneven).

The refractive index of the silica based fine particles 12 are preferably as low as possible. Specifically, the refractive index of the silica based fine particles 12 is preferably about 1.40 or less, and more preferably 1.35 or less. This makes it possible for the coating film 1 to exhibit more excellent antireflection performance.
An amount of the silica based fine particles 12 included in the coating film 1 is not particularly limited to a specific value, but is preferably in a range of about 5.0 to 30.0 wt% and more preferably in a range of about 10.0 to 20.0 wt% as a solid part. This makes it possible to lower the refractive index of the coating film 1, thereby exhibiting the sufficient antireflection performance.

It is preferred that the surface of each of such silica based fine particles 12 is grafted by a cyclohexane oligomer having a long chain. This makes it possible to efficiently suppress the silica based fine particles 12 from being aggregated. Therefore, it is possible to efficiently prevent or suppress the unnecessary concave-convex portions (convex portions 13) from being generated on the surface of the coating film 1.
As described above, the description was made on each part constituting the coating film 1.

A thickness of the coating film 1 is not particularly limited to a specific value, but is preferably in a range of about 50 to 200 nm, more preferably in a range of about 80 to 120 nm and even more preferably about 100 nm. By such a thickness, it is possible to efficiently prevent or suppress the unnecessary concave-convex portions (convex portions 13) from being generated on the surface of the coating film 1 while assisting the coating film 1 thinner.

It is preferred that a thermal expansion coefficient of the coating film 1 is substantially equal to that of the lens base (base material) 101. This makes it possible to suppress involuntary stress from being added to the coating film 1 because the lens base 101 and the coating film 1 are intumescent in the same degree as each other when the lens substrate 100 on which the coating film 1 is formed is heated in a rising temperature. Therefore, it is possible to efficiently prevent or suppress damages of the coating film 1, concretely, cracks from being generated.

It is preferred that Young's modulus of the coating film 1 are larger than Young's modulus of the lens base 101. This makes it possible to suppress involuntary stress from being added to the coating film 1 because the coating film 1 also warps with ease by the warp of the lens base 101 when the lens base 101 warps by external force. Therefore, it is possible to efficiently prevent or suppress the damages of the coating film 1, concretely, the cracks from being generated.
A refractive index of the coating film 1 is not particularly limited to a specific value, but is preferably 1.40 or less. This makes it possible to exhibit excellent antireflection performance.

As shown in FIG. 2, there is a case where convex portions (enlarged convex portions) 13, which are protruded from the surface (upper surface) of the coating film 1, are formed on the coating film 1. The convex portions 13 are formed by resulting from the silica based secondary particles 12' in which the silica based fine particles 12 are aggregated. In other words, the convex portions 13 are formed by arranging so as to protrude the silica based secondary particles 12' having a relatively large particle size from the surface of the coating film 1.

Existence of such convex portions 13 makes the following problems generate. For example, if the surface of the coating film 1 gets dirty and then the coating film 1 is rubbed by a cloth to remove the dirty, the silica based secondary particles existing in the convex portions 13 are removed from the coating film 1, so that concave portions are formed in parts in which the silica based secondary particles 12' are removed. The generation of such concave portions gives the cracks and the damages to the coating film 1. Further, it is easy for moisture (water) to penetrate from the concave portions into the coating film, thereby lowering the adhesion with respect to the hard coating layer 103 of the coating film 1. This makes it possible for the coating film 1 to peel off from the hard coating layer 103 with ease. As described above, there is a fear that the physical characteristics of the coating film 1 are lowered due to the generation of the concave portions.

Therefore, it is preferred that a number of the convex portions 13 per an unit area of the coating film 1 is as low as possible. By doing so, it is possible to suppress the physical characteristics of the coating film 1 from being lowered. In this regard, assuming that a shape of each of convex portions of the surface of the coating film 1 is a semioval sphere shape, the convex portions 13 mean convex portions (namely, referred to as "enlarged convex portions") that a relation of 2/3πabc≥1.0×10⁻¹² is satisfied, where a long radius is defined as "a", a short radius is defined as "b" and a protruded height is defined as "c", and do not include portions protruded from the surface of the coating film 1 that the relation of 2/3πabc≥1.0×10⁻¹² is not satisfied, namely a relation of 2/3πabc<1.0×10⁻¹² is satisfied. This is because that most of the silica based secondary particles 12' are included within (embedded into) the coating film 1 in the convex portions 13 wherein the relation of 2/3πabc≥1.0×10⁻¹² is not satisfied, and therefore there is a low possibility that the silica based secondary particles 12' are removed from the coating film 1 as described above.
In the coating film 1, a number of the convex portions 13 per 1 mm² of the coating film 1 is preferably 200 or less, more preferably 100 or less and even more preferably 0. This makes it possible to prevent or suppress the physical characteristics of the coating film 1 from being lowered as described above and obtain a coating film 1 which is capable of exhibiting predetermined physical characteristics.

### 2. Film Formation Coating Liquid

Next, a description will be made on a method of producing a film formation coating liquid for forming the coating film 1.
The method of producing the film formation coating liquid includes the following first step and second step.

### First Step

The first step is a step to obtain a liquid A containing a chain siloxane oligomer by adding an acid hydrolysis catalyst to a silane coupling agent containing a silane compound represented by the following general formula (1) and a halogenated silane represented by the following general formula (2), and then hydrolyzing the silane compound and the halogenated silane and performing a condensation polymerization of them under an environment of a pH in a range of 3.0 to 5.0.

R¹ₙR²ₚSiZ₄-(n+p) (1)

where in the formula each of the "R¹" and "R²" is an organic group having a carbon number in a range of 1 to 16 and at least one of the "R¹" and "R²" includes an epoxy group. The "Z" represents a hydrolysis group. The "n" and "p" are an integer of 0 to 2, and a relation of 1≤n+p≤3 is satisfied.

XₘR³₃₋ₘSi-Y-SiR³₃₋ₘXₘ (2)

where in the formula the "R³" represents a hydrocarbon group having a carbon number in a range of 1 to 6, the "Y" represents a divalent organic group including one or more fluorine atoms and the "X" represents a hydrolysis group. Further, the "m" is an integer of 1 to 3.

The compound represented by the above general formula (1) are arbitrarily selected according to purposes of adhesion to the base material, hardness and low reflectivity of the obtained coating film, a life of a composition and the like. Example such a compound include glycidoxy methyltrimethoxy silane, glycidoxy methyltriethoxy silane, α-glycidoxy ethyltrimethoxy silane, α-glycidoxy ethyltriethoxy silane, β-glycidoxy ethyltriethoxy siloane, β-glycidoxy propyltrimethoxy siloane, β-glycidoxy propyltrimethoxy silane, β-glycidoxy propyltriethoxy silane, β-glycidoxy propyltriethoxy silane, γ-glycidoxy propyltrimethoxy silane, (3,4-epoxy cyclohexyl) methyltrimethoxy silane, γ-glycidoxy propylvinyldiethoxy silane, γ-glycidoxy propylphenyldiethoxy silane, 5-(3,4-epoxy cyclohexyl)butyltriethoxy silane, and the like.

Among them, the compound represented by the above general formula (1) is preferably one of n+p=1, that is, a three functions-type silane compound having three -SiZ groups. This makes it possible to efficiently produce the chain siloxane oligomer which will be described later.
Amount of the silane compound is preferably in a range of 0.1 to 50.0 wt%, and more preferably in a range of 4.0 to 15.0 wt% with respect to a total amount of the silane coupling agent. This makes it possible for the coating film 1 to exhibit more excellent antireflection property, antifouling property, water repellency, abrasion resistance, chemical resistance and the like.

The halogenated silane represented by the above general formula (2) is not particularly limited to a specific compound, but is preferably one that a number of fluorine atoms is in a range of 4 to 50, and more preferably one that the number of fluorine atoms is in a range of 4 to 24. Therefore, the coating film 1 formed by using the film formation coating liquid can exhibit the excellent antireflection property, antifouling property, water repellency, abrasion resistance, chemical resistance and the like.
If the number of the fluorine atoms included in the halogenated silane represented by the above general formula (2) is smaller than the lower limit value noted above, there is a fear that the effects described above may not be able to be exhibited sufficiently depending of the amount of the halogenated silane and the like. In contrast, if the number of the fluorine atoms included in the halogenated silane represented by the above general formula (2) exceeds the upper limit value noted above, there is a fear that the density of the coating film 1 may be lowered depending of the amount of the halogenated silane and the like.

It is preferred that the "Y" in the above general formula (2), for example, is the followings: -CH₂CH₂(CF₂)ₙCH₂CH₂-, and -C₂H₄-CF(CF₃)-(CF₂)ₙ-CF(CF₃)-C₂H₄-, where the "n" is an integer in a range of 2 to 20.
Further, the "R³" in the above general formula (2) is not particularly limited as long as it is an alkyl group having a carbon number in a range of 1 to 6. Examples of such a "R³" include: an alkyl group such as a methyl group, an ethyl group, a propyl group, a buthyl group, a hexyl group and a cyclohexyl group; a phenyl group; and the like. Among them, the "R³" is preferably the methyl group from a purpose of obtaining excellent abrasion resistance.
The "m" in the above general formula (2) is the integer of 1 to 3, but preferably the integer of 2 or 3. This makes it possible to obtain the coating film 1 having more high hardness.

The "X" in the above general formula (2) represents a hydrolysis group. Specifically, examples of such a "X" include: a halogen atom such as Cl (chlorine atom); an organooxy group represented by ORX (the "RX" is a monovalent hydrocarbon group having a carbon number in a range of 1 to 6); an alkoxy group such as, in particular, a methoxy grop, an ethoxy group, a propoxy group, an isopropoxy group and a butoxy group; an alkenoxy group such as an isopropenoxy group; an acyloxy group such as an acetoxy group; a ketooxime group such as a mehylethyl ketooxim group; an alkoxy alkoxy group such as a methoxy ethoxy group; and the like. Among them, the alkoxy group is preferable, in particular, the silane compound including the methoxy group and the ethoxy group is preferable. This is because it is easy to handle the silane compound and to control a hydrolysis reaction thereof. Examples of such a "X" include groups having the following structures.

(CH₃O)₃Si-C₂H₄-C₄F₈-C₂H₄-Si (OCH₃)₃, (CH₃O)₃Si-C₂H₄-C₆F₁₂-C₂H₄-Si (OCH₃)₃, (CH₃O) ₃Si-C₂H₄-C₈F₁₆-C₂H₄-Si (OCH₃)₃, (C₂H₅O) ₃Si-C₂H₄-C₄F₈-C₂H₄-Si(OC₂H₅)₃, (C₂H₅O)₃Si-C₂H₄-C₆F₁₂-C₂H₄-Si(OC₂H₅)₃, (C₂H₅O)₂ (CH₃)Si-C₂H₄-C₆F₁₂-C₂H₄-Si(CH₃)(OC₂H₅)₂.

An amount of such a halogenated silane is preferably in a range of 50.0 to 99.9 wt%, and more preferably in a range of 85.0 to 96.0 wt% with respect to a total amount of the silane coupling agent. Therefore, the coating film 1 formed by using the film formation coating liquid can exhibit the excellent antireflection property, antifouling property, water repellency, abrasion resistance, chemical resistance and the like.

The acid hydrolysis catalysis is added to the mixture of the silane compound and the silane coupling agent to hydrolyze the silane compound represented by the above general formula (1) and the halogenated silane represented by the above general formula (2) and perform the condensation polymerization of them. Examples of such an acid hydrolysis catalysis include: an inorganic acid such as hydrochloric acid, sulfuric acid and nitric acid; an organic acid such as oxalic acid, acetic acid, trifluoroacetic acid, methanesulfonic acid, trifluoromethanesulfonic acid and lactic acid; and the like.

If the silane compound represented by the above general formula (1) and the halogenated silane represented by the above general formula (2) are hydrolyzed and the condensation polymerization of them is performed, a chaiin siloxane oligomer and a cyclic siloxane oligomer are obtained, so that a liquid A containing them is obtained. It is preferred that the chain siloxane oligomer is contained in a larger amount than the cyclic siloxane oligomer in the liquid A.

### Second Step

A second step is a step that silica based fine particles 12 is added to the liquid A obtained in the first step, and then the chain siloxane oligomer contained in the liquid A is hydrolyzed under an environment of a pH of 5.0 to 7.0 and the condensation polymerization of the chain siloxane oligomer is performed.
Such silica based fine particles 12 can be added to the liquid A in a state of dispersing into a dispersion medium. This makes it possible to efficiently prevent the silica based fine particles 12 from being aggregated and adjust the pH of the mixture of the liquid A and the silica based fine particles 12 to the range of 5.0 to 7.0 by a mutual influence with the dispersion medium.
The dispersion medium to disperse the silica based fine particles 12 is not particularly limited, but is preferably a neutral dispersion medium or a base dispersion medium. This makes it possible to fall the pH of the mixture of the liquid A and the silica based fine particles 12 within the range of 5.0 to 7.0 with relative ease.

Examples of such a dispersion medium, for example, include water, an organic solvent and a mixed solvent of them. Concretely, examples of such a dispersion medium include: the water such as pure water, ultra pure water and ion-exchange water; alcohols such as methanol, ethanol, isopropanol, n-butanol and methylisocarbinol; ketones such as acetone, 2-butanone, ethylamyl ketone, diacetone alcohol, isophorone and cyclohexanone; amidos such as N, N-dimethylformamide and N, N-dimethylacetamide; ethers such as diethylether, isopropylether, tetrahydrofura, 1,4-dioxane and 3,4-dihydro-2H-pyran; glycol ethers such as 2-methoxyethanol, 2-ethoxyethanol, 2-butoxyethanol and ethyleneglycol dimethylether; glycolether acetates such as 2-methoxyethyl acetate, 2-ethoxyethyl acetate and 2-butoxyethyl acetate; esters such as methyl acetate, ethyl acetate, isobuthyl acetate, amyl acetate, ethyl lactate and ethylene carbonate; aromatic hydrocarbons such as benzene, toluene and xylene; aliphatic hydrocarbons such as hexane, heptanes, iso-octane and cyclohexane; halogenated hydrocarbons such as dichloromethane, 1,2-dichloroethane, dichloropropane and chlorobenzene; sulfoxides such as dimethyl sulfoxide; pyrrolidones such as N-methyl-2-pyrrolidone and N-octhyl-2-pirrolidone; and the like.
The pH of the dispersion liquid in which the silica based fine particles 12 are dispersed is not particularly limited to a specific value as long as a pH of a mixture can fall within the range of 5.0 to 7.0 when the silica based fine particles 12 are mixed with the liquid A to obtain the mixture, but is preferably about 7.0.

By adding such a dispersion liquid to the liquid A, the silica based fine particles 12 are supplied into the liquid A, thereby falling the pH of the mixture of the liquid A and the dispersion liquid within the range of 5.0 to 7.0. Under the circumstances, the chain siloxane oligomer contained in the liquid A is hydrolyzed and the condensation polymerization of the chain siloxane oligomer is performed. This makes it possible to obtain a liquid B which includes: a binder component such as a siloxane oligomer having a cross-linked structure formed by bonding a plurality of chain siloxane oligomer together and a linear type siloxane oligomer; and silica based fine particles that the chain siloxane oligomer is grafted on the surface thereof. In particular, it is possible to produce the siloxane oligomer having the cross-linked structure in a large amount.

Hereinafter, a reason why the liquid B is obtained in the second step 2 will be described.
FIG. 3 shows a graph of a relation between a pH value and a reaction speed of a silica sol. It is referred to Toki Motoyuki, The Surface Finishiing, "Overview of Sol-Gel Method and Its Application", vol. 50, No. 2, pages 161-165.
As shown in FIG. 3, in the area of pH in the range of 5.0 to 7.0, a rate of the condensation polymerization reaction is faster than that of the hydrolysis reaction. Therefore, by the hydrolysis reaction and the condensation polymerization reaction, it is possible to obtain the binder component such as the cyclohexane oligomer having the cross-linked structure formed by bonding the plurality of chain siloxane oligomer together and the linear type siloxane oligomer, and the silica based fine particles that the chain siloxane oligomer is grafted on the surface thereof.

With regard to the hydrolysis reaction and the condensation polymerization reaction, the rate of the hydrolysis reaction is not particularly limited to a specific value, but is preferably 30% or less with respect to the rate of the condensation polymerization reaction.
Further, a time of each of the hydrolysis reaction and the condensation polymerization reaction is not particularly limited to a specific value, but is preferably in a range of about 20 to 30 hours at a low temperature in a range of 0 to 20°C, and more preferably about 24 hours at a temperature of 10°C. As described above, since the rate of the condensation polymerization reaction of the siloxane oligomer is relatively fast under the environment of the pH in the range of 5.0 to 7.0, it is possible to reliably and sufficiently perform the above reactions by falling the times of the reactions within the above noted range.
Next, for example, by mixing the liquid B with a solvent if necessary, the film formation coating liquid for forming the coating film 1 is obtained.

As described above, by grafting the chain siloxane oligomer, and then subjecting the silica based fine particles 12 to a surface treatment, it is possible to improve affinities thereof with respect to the binder component of the silica based fine particles 12 and the solvent, thereby improving the dispersibility of the particles. Therefore, it is possible to uniformly disperse the silica based fine particles 12 into the film formation coating liquid. Therefore, the coating film 1 formed by using such a film formation coating liquid becomes dense and exhibits the excellent adhesion, film strength, and abrasion resistance.
Further, since the film formation coating liquid contains the siloxane oligomer having the cross-linked structure as the binder component, the coating film 1 formed by using such a film formation coating liquid exhibits the excellent adhesion, film strength, and abrasion resistance.

### 3. Method of Forming Coating Film 1 Using Film Formation Coating Liquid

The coating film 1, for example, can be formed as follows.

### Coating Step

First, the film formation coating liquid are applied onto the lens substrate (hard coating layer 103) 100. A method of applying the film formation coating liquid is not particularly limited to a specific method. Examples the method include a spin coat method, a dip coat method, a roll coat method, a slit coater method, a transfer method and the like. Among them, the spin coat method is preferable. This makes uniformity of a thickness of the coating film and low dust generation property excellent.

### Sintering

Next, the film formation coating liquid applied onto the lens substrate 100 is pre-sintered for a length of time of 1 to 10 minutes at a temperature of a range of about 90 to 110°C. The pre-sintering can be performed under the atmosphere of nitrogen gas as inert gas or the atmosphere of air.
Next, the pre-sintered film formation coating liquid is sintered.
The sintering is performed for a length of time of about 1 to 2 hours at a temperature of a range of about 110 to 130°C. Also, the sintering can be performed under the atmosphere of the nitrogen gas as the inert gas or the atmosphere of the air.
By completing the above steps, the coating film 1 formed by using the film formation coating liquid is formed.
Hereinbefore, the description was made on the coating film of the invention, but the invention is not limited thereto.

### EXAMPLES

### 1. Production of Film Formation Coating Liquid Example 1

27.8 parts by weight of Halogenated silane represented by the following formula (B) and 152.9 parts by weight of a nitric acid aqueous solution of 0.1×10⁻³ mol/L were added into 2.8 parts by weight of a silane compound (alkoxy Silone) represented by the following formula (A) in a stainless vessel. They were mixed well to obtain a mixture having a pH of 4.0 at 25°C. The mixture was stirred for 120 hours at 25°C to obtain a liquid having a solid matter of 10.0 wt%.

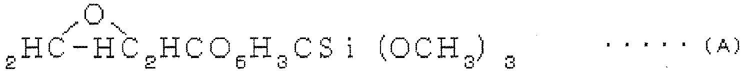

(CH₂O) ₂Si-C₂H₄-C₆F₁₂-C₂H₄-Si (OCH₂)₂ (B)

The liquid was mixed with a hollow silica-isopropanol dispersion sol (produced by Catalysts & Chemicals Industries Co., Ltd., a concentration of a solid matter was 20 wt%, an average primary particle size was 35 nm, an outer shell thickness was 8 nm) so that a solid matter ratio of the liquid and the hollow silica was 70/30. Then, the resultant was mixed well to obtain a mixture having a pH of 5.5 at 25°C. The mixture was stirred for 24 hours at 10°C to obtain a film formation coating liquid having a solid matter of 6.3 wt%.

### Example 2

27.8 parts by weight of Halogenated silane represented by the above formula (B) and 152.9 parts by weight of a nitric acid aqueous solution of 0.1x10⁻³ mol/L were added into 2.8 parts by weight of a silane compound represented by the above formula (A) in a stainless vessel. They were mixed well to obtain a mixture having a pH of 4.0 at 25°C. The mixture was stirred for 120 hours at 25°C to obtain a liquid having a solid matter of 10.0 wt%.

The liquid was mixed with a hollow silica-isopropanol dispersion sol (produced by Catalysts & Chemicals Industries Co., Ltd., a concentration of a solid matter was 20 wt%, an average primary particle size was 35 nm, an outer shell thickness was 8 nm) so that a solid matter ratio of the liquid and the hollow silica was 70/30. Then, the resultant was mixed well to obtain a mixture having a pH of 7.0 at 25°C. The mixture was stirred for 72 hours at 60°C to obtain a film formation coating liquid having a solid matter of 6.3 wt%.

### Comparative Example 1

27.8 parts by weight of Halogenated silane represented by the above formula (B) and 152.9 parts by weight of a hydrochloric acid aqueous solution of 0.1 mol/L were added into 2.8 parts by weight of a silane compound represented by the above formula (A) in a stainless vessel. They were mixed well to obtain a mixture having a pH of 1.0 at 25°C. The mixture was stirred for 120 hours at 25°C to obtain a liquid having a solid matter of 10.0 wt%.

The liquid was mixed with a hollow silica-isopropanol dispersion sol (produced by Catalysts & Chemicals Industries Co., Ltd., a concentration of a solid matter was 20 wt%, an average primary particle size was 35 nm, and an outer shell thickness was 8 nm) so that a solid matter ratio of the liquid and the hollow silica was 70/30. Then, they were mixed well to obtain a mixture having a pH of 1.0 at 25°C. The mixture was stirred for 24 hours at 25°C to obtain a film formation coating liquid having a solid matter of 6.3 wt%.

### 2. Film Formation of Coating Film

Propyleneglycol monomethyl ether of 420 parts by weight was added into the film formation coating liquid obtained in each of the Example 1 and Comparative Example 1 described above and the film formation coating liquid is diluted by it to obtain a coating liquid. Next, the coating liquid was applied onto a lens substrate by using a spin coat method. The applied coating liquid was pre-sintered in an atmosphere for 10 minutes at 100°C. Next, the resultant was sintered in the atmosphere for an hour and a half at 120°C. As a result, a coating film was formed. A thickness (average thickness) of the coating film was 100 nm.
In this regard, it is to be noted that the les substrate is obtained as follows.

### 2-1. Preparation of Primary Composition

Methyl alcohol of 3700 parts by weight, water of 250 parts by weight and propyleneglycol monomethyl ether of 1000 parts by weight were added into a stainless vessel, and then they are mixed sufficiently. Thereafter, a composite fine particle sol ("OPTOLAKE1120Z U-25 ·A8" produced by Catalysts & Chemicals Industries Co., Ltd., a total concentration of a solid matter was 20 wt%, a methanol dispersion, an anatase type crystal structure) of 2800 parts by weight, which was constituted of titanium oxide, zirconium oxide and silicon oxide as a major component thereof, was added to the stainless vessel to stir and mix them. Next, a polyurethane resin of 2200 parts by weight was further added to the stainless vessel to stir and mix them to obtain a mixture. Then, a silicone based surfactant ("L-7604" produced by Nippon Unicar Company Limited) of 2 parts by weight was further added into the mixture, and then it was stirred for a day and a night. The resultant was filtrated with a filter of 2 µm to obtain a primary composition.

### 2-2. Preparation of Hard Coating Composition

Buthyl cellosolve of 1000 parts by weight was added into a stainless vessel, and further γ-glycidoxy propyltrimethoxy silane of 1200 parts by weight was added into it to sufficiently stir them. Thereafter, 0.1 mol/L hydrochloric acid of 300 parts by weight was added into the stainless vessel, and then they were stirred for a day and a night to obtain a silane hydrolysate. A silicone based surfactant ("L-7001" produced by Nippon Unicar Company Limited) of 30 parts by weight was added into the silane hydrolysate, and then they were stirred for 1 hour. Thereafter, a composite fine particle sol ("OPTOLAKE1120Z 8RU-25, A17" produced by Catalysts & Chemicals Industries Co., Ltd., a methanol dispersion, a rutile type crystal structure) of 7300 parts by weight, which was constituted of titanium oxide, tin oxide and silicon oxide as a major component thereof, was added to the resultant to stir and mix them for 2 hours. Next, an epoxy resin ("DENACOL EX-313" produced by Nagase Chemicals Ltd.) of 250 parts by weight was added to the resultant to stir for 2 hours to obtain a mixture. Then, ferric acetylacetonato of 20 parts by weight was further added into the mixture, and then it was stirred for 1 hour. The resultant was filtrated with a filter of 2 µm to obtain a hard coating composition.

### 2-3. Formations of Primer Layer and Hard Coating Layer

Thiourethane based plastic lens base material ("Seiko Super Sovereign Cloth" produced by Seiko Epson Corp., refractive index 1.67) was prepared. Then, the prepared lens base material was subjected to an alkali treatment (after the prepared lens base material was dipped for 5 minutes into a potassium hydroxide aqueous solution of 2.0 N which was maintained at 50°C, it was washed with pure water. Next, the prepared lens base material was dipped for 1 minute into sulfuric acid of 0.5 N which was maintained at 25°C. As a result, it was neutralized), washed with pure water, dried and cooled. Thus cooled lens base material was dipped into the primary composition prepared in the above item 1, and then raised from the primary composition at a raising speed of 30 cm/min. The raised lens base material was sintered at 80°C for 20 minutes, so that a primer layer was formed on a surface of the lens base material. The lens base material on which the primer layer was formed was dipped into the hard coating composition prepared in the above item 2, and then raised from the hard coating composition at a raising speed of 30 cm/min. The raised lens base material was sintered at 80°C for 30 minutes, so that a hard coating layer was formed on the primer layer. Thereafter, the hard coating layer was heated for 3 hours in an oven which was set to 125°C to obtain a plastic lens in which the primer layer and the hard coating layer were formed. A thickness of the formed primer layer was 0.5 µm and a thickness of the hard coating layer was 2.5 µm.
The plastic lens in which the primer layer and the hard coating layer were formed was subjected to a plasma treatment (atmosphere plasma) to use as the lens substrate.

### 3. Evaluation

### 3-1. Agglomerating Property of Silica Based Fine Particles

The coating film formed by using the film formation coating liquid obtained in each of the Examples 1 and 2 and the Comparative Example 1 was observed by using an optical microscope ("System Biological Microscope BX50" produced by OLYMPUS CORPORATION) to obtain a number of convex portions 13 per 1 mm² of the coating film. Specifically, the coating film was observed in a planar view, positions of the existing convex portions (enlarged convex portions) were confirmed, and a cross section of each of the convex portions was observed. By doing so, a protrusion height of each of the convex portions was obtained. Only convex portions (hereinafter, simply referred to as "proper convex portions") of which protrusion height was a criterion value 2/3πabc≥1.0×10⁻¹² described above) or more were set as the convex portions 13, so that a number of the proper convex portions 13 was obtained. As a result, the number of the proper convex portions 13 which were generated on the coating film obtained in the example 1 was 174, the number of the proper convex portions 13 which were generated on the coating film obtained in the example 2 was 4, and the number of the proper convex portions 13 which were generated on the coating film obtained in the Comparative example 1 was 1069.

### 3-2. Resistance to Hot Water

The coating film formed on the lens substrate and obtained in each of the Examples 1 and 2 and the Comparative Example 1 was edged to correspond to a shape of frames. Then, the coating film was dipped into hot water of 60°C for 20 days. Thereafter, the lens substrate was taken from the hot water, cooled with water and then rubbed drops of water. Then, conditions as to whether or not the coating film was peeled off were visually confirmed, thereby evaluating according to the following fourth criteria including A to D grades. The results are shown in the Table 1.
A: The coating film is not peeled off at all (an area ratio of peeling off is 0%).
B: The coating film hardly is peeled off (the area ratio of peeling off is in a range of 1 to 19%).
C: The coating film is slightly peeled off (the area ratio of peeling off is in a range of 20 to 49%).
D: The coating film is peeled off (the area ratio of peeling off is 50% or more).

Table 1

**Table 1**

| | Resistance to hot water |
|---|---|
| Ex.1 | A |
| Ex. 2 | A |
| Com. Ex. 1 | D |

As clearly seen from Table 1, both the coating films obtained in the Examples 1 and 2 are superior to the coating film obtained in the Comparative Example 1 in the resistance to hot water. It is considered that this is because the silica based secondary particles 12' were removed from the convex portions 13 of the coating film by edging it in the coating film of the Comparative Example 1, thereby generating concave portions, so that the cracks occurs to the concave portions and moisture or water penetrates from the cracks. For these reasons, it is clear that the coating film (coating film of the invention) of the Example 1 is a dense film as compared with the coating film (conventional coating film) of the comparative Example 1.

## Claims

1. A coating film 1 comprising:
a binder component 11 containing an organosilicon compound;
aggregated particles 12' of silica based fine particles 12, the aggregated particles 12' are dispersed in the binder component 11;
wherein
the aggregated particles 12' are protruded from a surface of the coating film 1 to thereby form convex portions 13;
when a shape of each of the convex portions 13 is assumed to be a shape of a semiellipse spherical body including a long radius "a", a short radius "b" and a protrusion height "c", the convex portions 13 include enlarged convex portions 13 each of which satisfies the following relation: 2/3πabc≥1.0×10⁻¹² and
a number of the enlarged convex portions 13 is 200 or less per 1 mm² of the surface of the coating film 1.

2. The coating film as claimed in claim 1, wherein
the binder component 11 contains a siloxane oligomer having a cross-linked structure and a linear type siloxane oligomer, and
the silica based fine particles 12 include chain siloxane oligomers grafted on a surface of each of the silica based fine particles 12.

3. The coating film as claimed in claim 1 or 2, wherein a refractive index of the coating film 1 is 1.4 or less.

4. The coating film as claimed in any one of claims 1 to 3, wherein the silica based fine particles 12 are hollow silica particles.

5. The coating film as claimed in any one of claims 1 to 4, wherein an average particle size of the silica based fine particles 12 is in a range of 5 to 200 nm.

6. The coating film as claimed in any one of claims 1 to 5, wherein a thickness of the coating film 1 is in a range of 50 to 200 nm.

7. The coating film as claimed in any one of claims 1 to 6, wherein a thermal expansion coefficient of the coating film 1 is equal to a thermal expansion coefficient of a base material 101.

8. The coating film as claimed in any one of claims 1 to 7, wherein Young's modulus of the coating film 1 is larger than Young's modulus of a base material 101.

9. A coating film formation method comprising:
adding silica based fine particles 12 into a liquid containing at least a chain siloxane oligomer;
hydrolyzing the chain siloxane oligomer;
performing a condensation polymerization of the chain siloxane oligomer under an environment of a pH in a range of 5.0 to 7.0 to obtain a coating liquid;
applying the coating liquid onto a base material 100; and
drying the applied coating liquid.
